# EUROPÄISCHE PATENTSCHRIFT

(11) **EP 3 019 967 B1**
(45) Veröffentlichungstag und Bekanntmachung des Hinweises auf die Patenterteilung: **14.02.2018**
(21) Anmeldenummer: 14735939.2
(22) Anmeldetag: 02.07.2014
(51) Int. Cl.: G06F 13/40

(54) **ZÄHLEREINHEIT UND STEUERUNGSSYSTEM MIT ZÄHLEREINHEIT**
METER UNIT AND CONTROL SYSTEM WITH METER UNIT
UNITÉ DE COMPTAGE ET SYSTÈME DE COMMANDE COMPRENANT UNE UNITÉ DE COMPTAGE

(30) Priorität: 09.07.2013 DE 102013011391
(43) Veröffentlichungstag der Anmeldung: 18.05.2016
(73) Patentinhaber: Phoenix Contact GmbH & Co. KG, 32825 Blomberg (DE)
(72) Erfinder: WITTIG, Bernd, 33106 Paderborn-Sande (DE)
(74) Vertreter: Blumbach · Zinngrebe Patent- und Rechtsanwälte
(86) Internationale Anmeldenummer: PCT/EP2014/064106
(87) Internationale Veröffentlichungsnummer: WO 2015/003979

(56) Entgegenhaltungen:
- WO-A1-87/07054

## Beschreibung

Die Erfindung betrifft eine Zählereinheit und ein Steuerungssystem mit einer solchen Zählereinheit zum Zählen von Mengen, etwa einer Anzahl von Gegenständen oder Ereignissen, oder zum Ermitteln von Frequenzen.

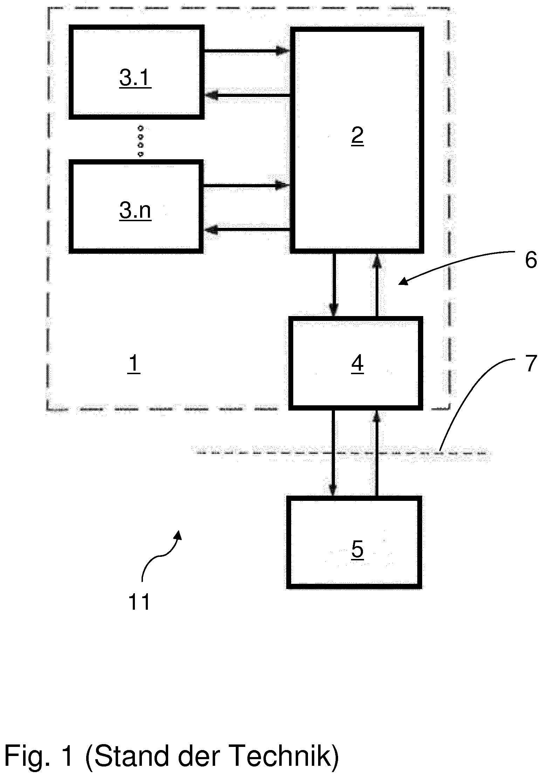

Im Umfeld automatisiert gesteuerter Prozesse ist der Einsatz von Zählern zum Zählen von Mengen oder Ereignissen sowie zum Ermitteln von Frequenzen bekannt. Die Figur 1 zeigt zum Beispiel ein aus dem Stand der Technik bekanntes Steuerungssystem, bei dem Zählermodule als Funktionsbausteine in Form von Software oder Hardware in ein Prozessorsystem einer zur Prozesssteuerung vorgesehenen Steuerungseinrichtung, beispielsweise einer speicherprogrammierbaren Steuerungseinrichtung (SPS), integriert bzw. direkt mit diesem Prozessorsystem verbunden sind. Das Prozessorsystem führt Software in Form von Firmware und Anwendungssoftware, welche wenigstens ein Steuerungsprogramm umfasst, aus. Über einen als Prozessdatenbus ausgebildeten internen Bus und eine Busschnittstelleneinheit der Steuerungseinrichtung ist das Prozessorsystem an einen externen Bus, wie zum Beispiel einen als Fernbus oder Lokalbus ausgebildeten Feldbus, angeschlossen, an den weitere Busteilnehmereinheiten wie zum Beispiel Eingangs- oder Ausgangsbaugruppen angeschlossen sind. Von Nachteil ist bei dieser Lösung, dass der Weg der von einer Busteilnehmereinheit stammenden Eingangsdaten mit Informationen für ein Zählermodul sowie umgekehrt der Weg der Ergebnisdaten eines Zählermoduls mit Informationen für eine Busteilnehmereinheit stets über das Prozessorsystem führt, und dass die Zählermodule vom Prozessorsystem abhängig sind. Dadurch wird zum einen das Prozessorsystem belastet, da in der ausgeführten Software und insbesondere in der Anwendungssoftware entsprechende Programmschritte zum Abfragen, Verarbeiten und Weiterleiten der Eingangs- und Ergebnisdaten enthalten sind, die vom Prozessorsystem stets auszuführen sind. Zum anderen können sich das stets beteiligte Prozessorsystems und die von diesem auszuführende Software negativ auf Latenzzeiten und Jitterverhalten der Zählfunktion auswirken, so dass ein schnelles und genaues Zählen von Mengen oder Ereignissen bzw. Ermitteln von Frequenzen nicht zuverlässig möglich ist, insbesondere wenn Daten mit hohen Datenraten und/oder Datenvolumen vorliegen. WO8707054 offenbart eine Zählereinheit mit einem Zählermodul und einem Busschnittstellenmodul, wobei die Zählereinheit als Hardware ausgebildet ist und über das Busschnittstellenmodul die Zählereinheit an ein Bussystem ankoppelbar ist, wobei Eingangsdaten für das Zählermodul über das Busschnittstellenmodul aus einem Bussystem empfangbar und Ergebnisdaten des Zählermoduls über das Busschnittstellenmodul auf das Bussystem ausgebbar sind. Ferner ist aus der DE 42 10 015 C2 eine

Hochgeschwindigkeitszähleinrichtung bekannt, bei welcher ein in Hardware implementiertes Zählermodul entfernt von einer programmierbaren Steuerungseinrichtung angeordnet und mit dieser über eine serielle Fern-E/A-Verbindung verbunden ist. Über eine separate Leitung kann das Zählermodul ein Signal von einem Drehcodierer oder einem Sensor empfangen. Das Zählermodul wird dabei unter der Steuerung eines Mikroprozessors betrieben. Von Nachteil ist dabei jedoch, dass das Zählermodul entfernt von der Steuerungseinrichtung und in der Nähe des jeweiligen Drehcodierers oder Sensors anzuordnen ist, von dem es sein Eingangssignal dann über eine separate Leitung erhält. Dies führt insbesondere bei großen industriellen Anlagen, die mehrere Zählermodule erfordern, zu einer räumlichen Verteilung der Zählermodule und erfordert viele separate Verbindungsleitungen, und führt damit zu einem erhöhten Installations- und Wartungsaufwand.

Eine der Erfindung zugrunde liegende Aufgabe besteht somit darin, eine schnelle und genaue Zählfunktion mit geringem Installations- und Wartungsaufwand bereitzustellen.

Erfindungsgemäß wird diese Aufgabe gelöst durch eine Zählereinheit mit den Merkmalen nach Anspruch 1 sowie durch ein Steuerungssystem mit den Merkmalen nach Anspruch 6.

Die erfindungsgemäße Zählereinheit besitzt wenigstens ein Zählermodul und ein Busschnittstellenmodul und ist dadurch gekennzeichnet, dass die Zählereinheit als Hardware ausgebildet ist und die Zählereinheit über das Busschnittstellenmodul an ein Bussystem ankoppelbar ist, so dass Eingangsdaten für das Zählermodul aus einem Bussystem empfangbar und Ergebnisdaten des Zählermoduls auf das Bussystem ausgebbar sind.

Die erfindungsgemäße Zählereinheit bietet viele Vorteile. So ist die Zählereinheit selbst an ein Bussystem ankoppelbar und eine Zählfunktion somit unabhängig von einem Prozessorsystem einer Steuerungseinrichtung bereitstellbar. Eingangsdaten stehen dem Zählermodul ohne Umweg über das Prozessorsystem direkt zur Verfügung und Ergebnisdaten des Zählermoduls können ohne Umweg über das Prozessorsystem direkt auf das Bussystem ausgegeben werden. Das Prozessorsystem der Steuerungseinrichtung kann von der Zählfunktion entlastet werden, da diese auf die Zählereinheit ausgelagert werden kann. Dies ist insbesondere dann vorteilhaft, wenn der vom Prozessorsystem sonst zu bewältigende Datendurchsatz sehr hoch wäre, aufgrund einer Zählfunktion für Daten mit hohen Datenraten und/oder hohem Datenvolumen. Durch Auslagerung der Zählfunktion auf die Zähleinheit werden Kapazitäten des Prozessorsystems für andere Funktionen frei oder es kann nunmehr ein günstigeres Prozessorsystem mit geringerer Leistungsfähigkeit eingesetzt werden, um lediglich die verbleibenden Steuerungsfunktionen bereitzustellen. Da die Zählereinheit in Hardware aufgebaut ist, kann sie die Zählfunktion zudem schneller ausführen als ein Prozessorsystem, das die Zählfunktion per Software implementiert. Softwarebedingte Verzögerungen entfallen nunmehr, das heißt Latenzzeiten und Jitterverhalten der von der Zählereinheit bereitgestellten Zählfunktion genügen höheren Anforderung und ermöglichen zuverlässig ein schnelles und genaues Zählen von Mengen oder Ereignissen bzw. Ermitteln von Frequenzen auch wenn Daten mit hohen Datenraten und/oder Datenvolumen vorliegen.

Gemäß einer bevorzugten Ausführungsform umfasst die Zählereinheit ein Auswertungs- und Zuordnungsmodul, das mit dem Busschnittstellenmodul und dem Zählermodul verbunden ist, wobei das Auswertungs- und Zuordnungsmodul ausgebildet ist aus einem in einem Bussystem übertragenen Datenstrom Eingangsdaten für das Zählermodul zu maskieren und auszuwerten und sie dem Zählermodul zuzuordnen und weiterzuleiten. Dabei können die dem Datenstrom entnommenen Eingangsdaten zum Beispiel Steuerbits und/oder Statusbits umfassen. Vorteilhafter Weise können also die relevanten Eingangsdaten, welche zu zählende Informationen enthalten bzw. repräsentieren, von der Zählereinheit aus dem Datenstrom extrahiert werden.

Gemäß einer weiteren bevorzugten Ausführungsform umfasst die Zählereinheit wenigstens ein weiteres Zählermodul und ein Schaltmodul, wobei über das Schaltmodul das Auswertungs- und Zuordnungsmodul mit den Zählermodulen verbunden ist. Dabei ist das Schaltmodul insbesondere als Demultiplexer für Eingangsdaten für die Zählermodule und als Multiplexer für die Ergebnisdaten der Zählermodule ausgebildet. So besitzt das Schaltmodul zum Beispiel auf der einen Seite einen Anschaltkanal für das Auswertungs- und Zuordnungsmodul und auf der anderen Seite mehrere Anschaltkanäle, wobei an jeweils einen der Anschaltkanäle ein Zählermodul angeschaltet ist. Vorteilhafter Weise können also innerhalb der einen Zählereinheit mehrere Zählermodule mit einer funktionalen Beschaltung vorgesehen sein, die unabhängig voneinander mehrere Zählfunktionen bereitstellen können.

Gemäß einer weiteren bevorzugten Ausführungsform umfasst die Zählereinheit wenigstens ein Steuermodul, das mit dem Auswertungs- und Zuordnungsmodul und insbesondere auch mit dem Schaltmodul verbunden ist, wobei das Steuermodul ausgebildet ist zum Steuern der Funktionsweise der Zählereinheit und insbesondere zum Steuern des Auswertungs- und Zuordnungsmoduls und/oder des Schaltmoduls.

Gemäß einer weiteren bevorzugten Ausführungsform umfasst die Zählereinheit ein Registermodul, das ausgebildet ist zum Speichern wenigstens eines Parameters,
wobei der Parameter insbesondere eine Zuordnungsinformation, einen Grenzwert, oder einen Schwellenwert umfasst. Dabei ist das Registermodul mit dem Steuermodul verbunden, wobei das Steuermodul zum Steuern der Funktionsweise der Zählereinheit unter Berücksichtigung des in dem Registermodul gespeicherten Parameters ausgebildet ist. Dies bietet den Vorteil, dass die Zählereinheit und deren Funktionsweise parametrierbar und somit leicht anpassbar ist.

Das erfindungsgemäße Steuerungssystem umfasst neben einer erfindungsgemäßen Zählereinheit eine Steuerungseinrichtung und ein Bussystem, wobei die Zählereinheit und die Steuerungseinrichtung mit dem Bussystem verbunden sind. Somit bietet auch das Steuerungssystem die bereits genannten Vorteile.

Gemäß einer bevorzugten Ausführungsform umfasst die Steuerungseinrichtung des Steuerungssystems ein Prozessorsystem und eine Busschnittstelleneinheit, wobei das Bussystem einen internen Bus umfasst, mittels dem das Prozessorsystem und die Busschnittstelleneinheit miteinander verbunden sind. Dabei ist der interne Bus insbesondere als Prozessdatenbus ausgebildet.

Gemäß einer weiteren bevorzugten Ausführungsform umfasst das Steuerungssystem wenigstens eine Busteilnehmereinheit, wobei das Bussystem einen externen Bus umfasst, mittels dem die Busschnittstelleneinheit der Steuerungseinrichtung und die Busteilnehmereinheit miteinander verbunden sind. Dabei ist der externe Bus insbesondere als Feldbus, zum Beispiel in Form eines Lokal- oder eines Fernbusses ausgebildet.

Gemäß einer weiteren bevorzugten Ausführungsform des Steuerungssystems ist die Zählereinheit an den internen Bus oder an den externen Bus angekoppelt. Das Busschnittstellenmodul ist dabei für die Kommunikationsmechanismen und -protokolle des jeweiligen Busses geeignet ausgebildet. Diese Flexibilität der Zählereinheit hinsichtlich der Ankopplungsmöglichkeit an verschiedene Busse stellt einen weiteren Vorteil dar.

Gemäß einer weiteren bevorzugten Ausführungsform des Steuerungssystems empfängt die Zählereinheit Eingangsdaten für das Zählermodul von dem Prozessorsystem und/oder von der Busteilnehmereinheit aus dem Bussystem. Ferner gibt die Zählereinheit Ergebnisdaten des Zählermoduls an das Prozessorsystem und/oder an die Busteilnehmereinheit auf das Bussystem aus. Bei den vom Prozessorsystem stammenden Eingangsdaten für das Zählermodul kann es sich um ausgehende Prozessdaten des Prozessorsystems handeln. Bei den von der Busteilnehmereinheit stammenden Eingangsdaten für das Zählermodul kann es sich um eingehende Prozessdaten der Busteilnehmereinheit handeln. Vorteilhafter Weise können also die relevanten Eingangsdaten, welche zu zählende Informationen enthalten bzw. repräsentieren, Prozessdaten sein, die von dem Prozessorsystem oder von einer Busteilnehmereinheit stammen.

Gemäß einer weiteren bevorzugten Ausführungsform umfasst des Steuerungssystems wenigstens eine weitere Busteilnehmereinheit, die ebenfalls mit dem externen Bus verbunden ist. Dabei empfängt die Zählereinheit Eingangsdaten von der einen Busteilnehmereinheit aus dem Bussystem und gibt Ergebnisdaten an die andere Busteilnehmereinheit auf das Bussystem aus. Dabei kann zum Beispiel die eine Busteilnehmereinheit eine Eingangsbaugruppe mit wenigstens einem Sensor umfassen. Ferner kann die andere Busteilnehmereinheit eine Ausgangsbaugruppe mit wenigstens einem Aktor umfassen.

Diese und weitere Merkmale und Vorteile ergeben sich auch aus der folgenden Beschreibung von Ausführungsbeispielen in Zusammenhang mit den beiliegenden Zeichnungen. Es zeigt
- Figur 1: eine schematische Darstellung eines Steuerungssystems gemäß dem Stand der Technik;
- Figur 2: eine schematische Darstellung eines Steuerungssystems mit einer Zählereinheit gemäß einer Ausführungsform der Erfindung;
- Figur 3: eine alternative Darstellung des Steuerungssystems gemäß Figur 2;
- Figur 4: eine schematische Darstellung eines Steuerungssystems mit einer Zählereinheit gemäß einer weiteren Ausführungsform der Erfindung; und
- Figur 5: eine schematische Darstellung eines Steuerungssystems mit einer Zählereinheit gemäß einer weiteren Ausführungsform der Erfindung.

Die Figur 1 zeigt beispielhaft ein aus dem Stand der Technik, wie bereits eingangs erwähnt, bekanntes Steuerungssystem 11, bei dem Zählermodule 3.1 bis 3.n als Funktionsbausteine in Form von Software oder Hardware direkt mit einem Prozessorsystem 2 einer zur Prozesssteuerung vorgesehenen Steuerungseinrichtung 1n wie etwa einer speicherprogrammierbaren Steuerungseinrichtung (SPS), verbunden sind. Alternativ, können die Zählermodule Funktionsbausteine auch in dem Prozessorsystem integriert sein. Das Prozessorsystem 2 führt hier nicht weiter dargestellte Software in Form von Firmware und Anwendungssoftware, welche wenigstens ein Steuerungsprogramm umfasst, aus. Über einen als Prozessdatenbus 6 ausgebildeten internen Bus und eine Busschnittstelleneinheit 4 der Steuerungseinrichtung 1 ist das Prozessorsystem 2 an einen externen Bus 7 wie zum Beispiel einen als Fernbus oder Lokalbus ausgebildeten Feldbus angeschlossen, an den weitere Busteilnehmereinheiten 5 wie zum Beispiel Eingangs- oder Ausgangsbaugruppen angeschlossen sind, von denen hier nur eine dargestellt ist. Die Nachteile dieser aus dem Stand der Technik bekannten Lösung wurden eingangs bereits beschrieben. Problematisch ist hierbei vor allem, dass der Weg der von einer Busteilnehmereinheit 5 stammenden Eingangsdaten mit Informationen für ein Zählermodul 3.1 oder 3.n sowie umgekehrt der Weg der Ergebnisdaten eines Zählermoduls mit Informationen für eine Busteilnehmereinheit 5 stets über das Prozessorsystem 2 und die von diesem auszuführende Software führt.

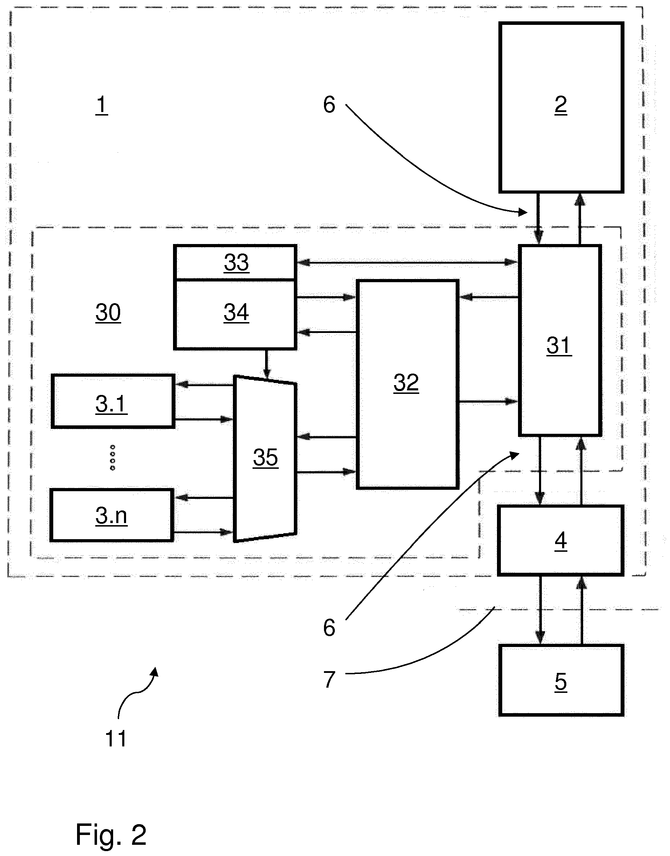

Im Gegensatz zur Figur 1 zeigen die Figuren 2 bis 5 drei erfindungsgemäße Ausführungsformen eines Steuerungssystems 11 mit einer Zählereinheit 30, bei welchen die Zählereinheit 30 mit wenigstens einem Zählermodul und einem Busschnittstellenmodul als Hardware ausgebildet ist und über das Busschnittstellenmodul an ein Bussystem ankoppelbar bzw. bereits angekoppelt ist, so dass Eingangsdaten für das Zählermodul aus dem Bussystem empfangbar und Ergebnisdaten des Zählermoduls auf das Bussystem ausgebbar sind. Aus Gründen der Einfachheit und besseren Nachvollziehbarkeit werden dabei in den Figuren gleiche Bezugszeichen für Komponenten mit vergleichbaren Eigenschaften bzw. Funktionalitäten verwendet. Die vorhandenen Unterschiede ergeben sich jedoch aus der vorangegangenen und nachfolgenden Beschreibung.

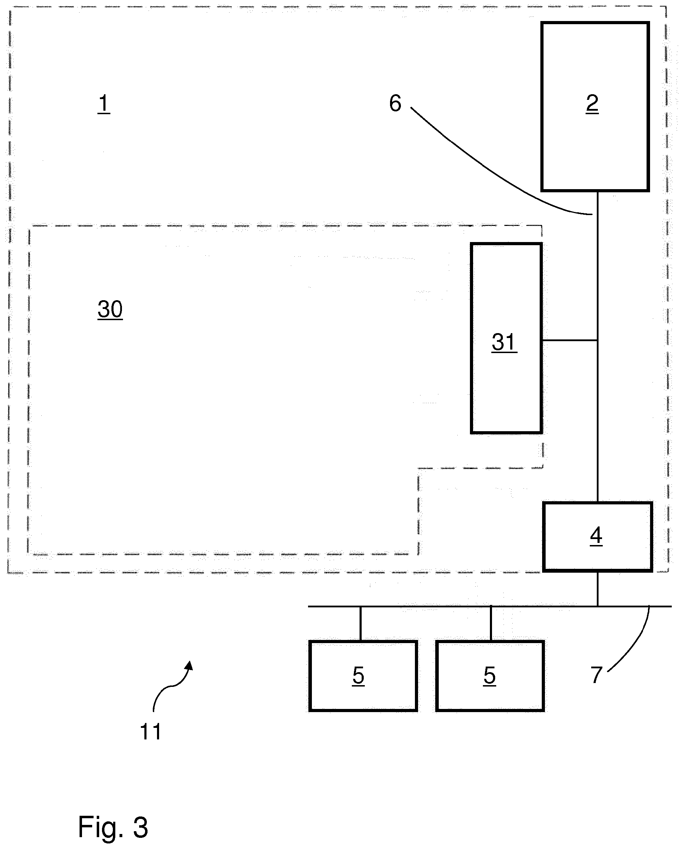

Die Figuren 2 und 3 zeigen eine erste beispielhafte Ausführungsform eines Steuerungssystems 11 mit einer Zählereinheit 30 gemäß der vorliegenden Erfindung.

Dieses Steuerungssystem 11 umfasst neben einer erfindungsgemäßen Zählereinheit 30 eine Steuerungseinrichtung 1 mit einem Prozessorsystem 2 und einer Busschnittstelleneinheit 4, die über einen als Prozessdatenbus ausgebildeten internen Bus 6 der Steuerungseinrichtung 1 miteinander verbunden sind. An den internen Bus 6 ist auch die Zählereinheit 30 mittels ihres Busschnittstellenmoduls 31 angekoppelt. Das Busschnittstellenmodul 31 ist dabei für die Kommunikationsmechanismen und -protokolle des internen Busses 6 geeignet ausgebildet.

Das Steuerungssystem 11 umfasst ferner zwei Busteilnehmereinheiten 5, von denen in Figur 2 nur eine und in Figur 3 beide dargestellt sind. Über einen externen Bus 7 des Steuerungssystem 11, der hier als Feldbus in Form eines Lokalbusses ausgebildet ist, sind die Busschnittstelleneinheit 4 der Steuerungseinrichtung 1 und die beiden Busteilnehmereinheit 5 miteinander verbunden. Die eine der Busteilnehmereinheiten 5 umfasst eine nicht näher dargestellte Eingangsbaugruppe mit wenigstens einem Sensor, während die andere Busteilnehmereinheit 5 eine nicht näher dargestellte Ausgangsbaugruppe mit wenigstens einem Aktor umfasst.

Über das den externen Bus 7 und den internen Bus 6 umfassende Bussystem können beispielsweise Prozessdaten und insbesondere Prozesseingangsgangdaten und Prozessausgangsdaten zur Steuerung eines Prozesses einer industriellen Anlage als Datenstrom zwischen den Busteilnehmereinheiten 5 und dem Prozessorsystem 2 der Steuerungseinrichtung 1 und umgekehrt übertragen werden.

Die Zählereinheit 30 ist in Hardware ausgeführt und besitzt neben dem Schnittstellenmodul 31 in bevorzugter Ausführung mehrere Zählermodule, von denen hier die Zählermodule 3.1 und 3.n dargestellt sind. Die Zählereinheit 30 umfasst zudem ein Auswertungs- und Zuordnungsmodul 32, das mit dem Busschnittstellenmodul 31 verbunden ist. Über ein Schaltmodul 35 der Zählereinheit 30 ist das Auswertungs- und Zuordnungsmodul 32 mit den Zählermodulen 3.1, 3.n verbunden.

Über das Busschnittstellenmodul 31 der Zählereinheit 30 sind Eingangsdaten für das Zählermodul 3.1 bzw. 3.n aus einem Bussystem empfangbar und Ergebnisdaten des Zählermoduls 3.1 bzw. 3.n auf das Bussystem ausgebbar. Das Auswertungs- und Zuordnungsmodul 32 ist ausgebildet, aus einem über den internen Bus 6 übertragenen Datenstrom Eingangsdaten für das Zählermodul 3.1 bzw. 3.n zu maskieren und auszuwerten und sie dem jeweiligen Zählermodul zuzuordnen und weiterzuleiten. Dabei können die dem Datenstrom entnommenen Eingangsdaten zum Beispiel Steuerbits und/oder Statusbits umfassen. Es können somit die relevanten Eingangsdaten, welche zu zählende Informationen enthalten bzw. repräsentieren, von der Zählereinheit aus dem Datenstrom extrahiert werden.

Das Schaltmodul 35 ist als Demultiplexer für Eingangsdaten für die Zählermodule 3.1, 3.n und als Multiplexer für die Ergebnisdaten der Zählermodule 3.1, 3.n) ausgebildet und besitzt auf der einen Seite einen Anschaltkanal (ohne Bezugszeichen) für das Auswertungs- und Zuordnungsmodul 32 und auf der anderen Seite mehrere Anschaltkanäle (ohne Bezugszeichen), wobei an einen der Anschaltkanäle das Zählermodul 3.1 und an einen anderen der Anschaltkanäle das Zählermodul 3.n angeschaltet ist. Dank des Auswertungs- und Zuordnungsmodul 32 und des Schaltmodul 35 können also innerhalb der einen Zählereinheit 30 mehrere Zählermodule 3.1, 3.n unabhängig voneinander mehrere Zählfunktionen bereitstellen.

Die Zählereinheit 30 umfasst außerdem ein Steuermodul 34, das mit dem Auswertungs- und Zuordnungsmodul 32 und mit dem Schaltmodul 35 verbunden ist, sowie ein mit dem Steuermodul 34 verbundenes Registermodul 33. Dabei ist das Registermodul 33 ausgebildet zum Speichern wenigstens eines Parameters, und das Steuermodul 34 ist ausgebildet zum Steuern der Funktionsweise der Zählereinheit (30), insbesondere zum Steuern des Auswertungs- und Zuordnungsmoduls 32 bzw. des Schaltmoduls 35, unter Berücksichtigung des in dem Registermodul 33 gespeicherten Parameters. Der wenigstens eine in dem Register gespeicherte Parameter kann eine Zuordnungsinformation, einen Grenzwert, oder einen Schwellenwert umfassen. Über die Zuordnungsinformation kann zum Beispiel festgelegt sein, welche Eingangsdaten welchem Zählermodul zuzuordnen bzw. weiterzuleiten sind. Somit ist die Zählereinheit 30 und deren Funktionsweise, etwa das Schaltverhalten des Schaltmoduls 35, parametrierbar und entsprechend leicht anpassbar. Dies wird weiterhin dadurch erleichtert, dass das Registermodul 33 auch mit der Busschnittstelle 31 verbunden ist, so dass ein Lese- und/oder Schreibzugriff auf das Registermodul 33 von einer über das Bussystem mit der Zählereinheit 30 verbundenen Einrichtung möglich ist, wobei eine solche Einrichtung das Prozessorsystem 2 oder zum Beispiel ein hier nicht dargestellter Wartungsterminal sein kann.

Neben den Zählermodulen 3.1 und 3.n kann auch wenigstens ein Komparatormodul und/oder wenigstens ein Gatemodul (UND, ODER), welche hier nicht dargestellt sind, mit dem Schaltmodul verbunden sein.

Die Zählereinheit 30 ist also mittels ihres Busschnittstellenmoduls 31 an den internen Bus 6 der Steuerungseinrichtung 1 angekoppelt und somit zwischen dem Prozessorsystem 2 und der Schnittstelleneinheit 4 angeordnet und über den internen Bus 6 mit beiden verbunden. Aufgrund der Schnittstelleneinheit 4, die den internen Bus mit dem externen Bus 7 koppelt, ist die Zählereinheit 30 ebenso wie das Prozessorsystem 2 mit den Busteilnehmereinheiten 5 verbunden.

Aus dem Bussystem 6, 7 bzw. aus einem über das Bussystem übertragenen Datenstrom empfängt die Zählereinheit 30 Eingangsdaten für die Zählermodule 3.1, 3.n, die von dem Prozessorsystem 2 und/oder von einer der Busteilnehmereinheiten 5 stammen. Ferner gibt die Zählereinheit 30 Ergebnisdaten der Zählermodule 3.1, 3.n an das Prozessorsystem 30 und/oder an eine der Busteilnehmereinheiten 5 auf das Bussystem 6, 7 aus.

Bei den vom Prozessorsystem stammenden Eingangsdaten für das Zählermodul kann es sich um ausgehende Prozessdaten bzw. Prozessausgangsdaten des Prozessorsystems 2 handeln. Bei den von einer der Busteilnehmereinheiten stammenden Eingangsdaten für das Zählermodul kann es sich um eingehende Prozessdaten bzw. Prozesseingangsdaten der Busteilnehmereinheit handeln. Vorteilhafter Weise können also die relevanten Eingangsdaten, welche zu zählende Informationen enthalten bzw. repräsentieren, Prozessdaten sein, die von dem Prozessorsystem oder von einer Busteilnehmereinheit stammen.

Das Empfangen von Eingangsdaten für die Zählermodule kann beispielsweise seitens der Zählereinheit in Form eines Mitlesens des über das Bussystem übertragenen Datenstroms und der darin enthaltenen Prozessdaten erfolgen. Innerhalb des Datenstroms können dabei verschiedene Datenbereiche vorgesehen sein, die für Daten bestimmter Busteilnehmer bzw. des Prozessorsystems reserviert sind. Dabei werden dann die von der Zählereinheit mitgelesenen Daten entsprechend der vorher eingestellten Maske ausgewertet und als Eingangsdaten für die Zählermodule verarbeitet. Ferner können in dem Datenstrom auch Datenbereiche vorgesehen sein, die für die Ergebnisdaten der Zählermodule reserviert sind. Dabei werden dann die Ergebnisdaten entsprechend der vorher eingestellten Maske in die jeweiligen Datenbereiche des Datenstroms eingeschrieben und somit versendet. Die Ergebnisdaten der Zählermodule stehen den anderen Busteilnehmern bzw. dem Prozessorsystem als Prozessdaten zur Verfügung.

Die Zählereinheit 30 ist somit selbst an ein Bussystem ankoppelbar und eine Zählfunktion somit auch unabhängig von dem Prozessorsystem 2 der Steuerungseinrichtung 1 bereitstellbar. Eingangsdaten stehen den Zählermodulen 3.1, 3.n ohne Umweg über das Prozessorsystem direkt zur Verfügung und Ergebnisdaten der Zählermodule können ohne Umweg über das Prozessorsystem direkt auf das Bussystem 6, 7 ausgegeben werden.

Bis auf das Busschnittstellenmodul 31 sind die weiteren bereits beschriebenen und in Figur 2 dargestellten Module 32, 33, 34, 35, 3.1 und 3.n der Zählereinheit 30 in Figur 3 der Einfachheit halber nicht nochmals dargestellt, jedoch ebenso vorgesehen.

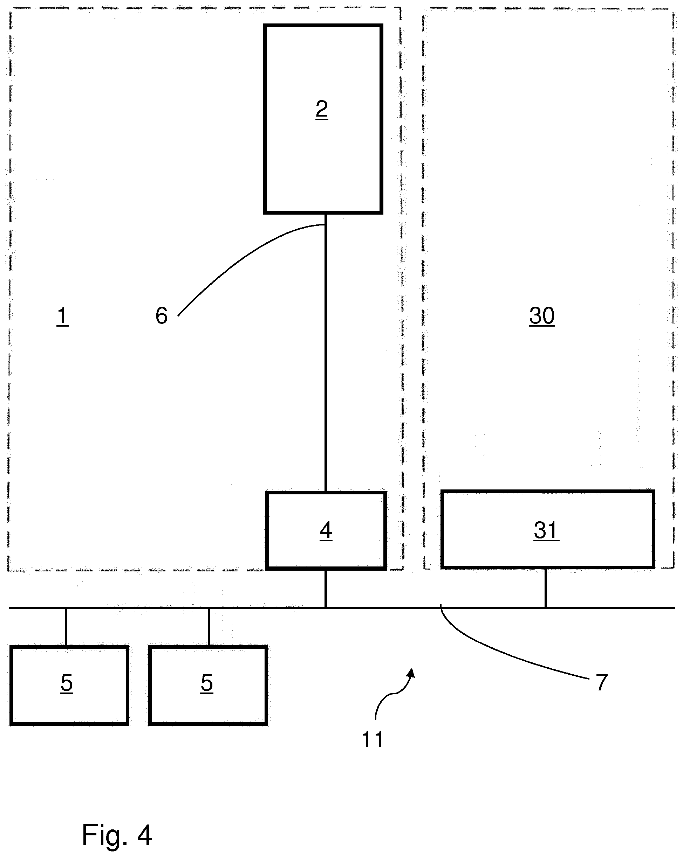

Die Figur 4 zeigt eine zweite beispielhafte Ausführungsform eines Steuerungssystems 11 mit einer Zählereinheit 30 gemäß der vorliegenden Erfindung.

Im Unterschied zur ersten Ausführungsform gemäß der Figuren 2 und 3 umfasst dieses Steuerungssystem 11 gemäß Figur 4 eine Zählereinheit 30, die mittels ihres Busschnittstellenmoduls 31 nicht am internen Bus 6 der Steuerungseinrichtung 1 sondern am externen Bus 7 angekoppelt ist. Das Busschnittstellenmodul 31 ist dabei für die Kommunikationsmechanismen und -protokolle des externen Busses 7 geeignet ausgebildet und wirkt insbesondere wie eine Busschnittstelleneinheit 4 gemäß der Figuren 2 und 3.

Die Zählereinheit 30 ist somit nicht von der Steuerungseinrichtung 1 umfasst, sondern ebenso wie die Steuerungseinrichtung 1 selbst an den externen Bus 7 angekoppelt und über den externen Bus 7 auch mit den Busteilnehmereinheiten 5 verbunden. Aufgrund der Schnittstelleneinheit 4 der Steuerungseinrichtung 1, die den internen Bus 6 der Steuerungseinrichtung 1 mit dem externen Bus 7 koppelt, ist die Zählereinheit 30 auch mit dem Prozessorsystem 2 der Steuerungseinrichtung 1 verbunden.

Auch bei dieser Ausführungsform empfängt die Zählereinheit 30 aus dem Bussystem 6, 7 bzw. aus einem über das Bussystem übertragenen Datenstrom Eingangsdaten für die Zählermodule 3.1, 3.n, die von dem Prozessorsystem 2 und/oder von einer der Busteilnehmereinheiten 5 stammen. Ferner gibt die Zählereinheit 30 Ergebnisdaten der Zählermodule 3.1, 3.n an das Prozessorsystem 30 und/oder an eine der Busteilnehmereinheiten 5 auf das Bussystem 6, 7 aus.

Bis auf das Busschnittstellenmodul 31 sind die weiteren bereits beschriebenen und in Figur 2 dargestellten Module 32, 33, 34, 35, 3.1 und 3.n der Zählereinheit 30 in Figur 4 der Einfachheit halber nicht nochmals dargestellt, jedoch ebenso vorgesehen.

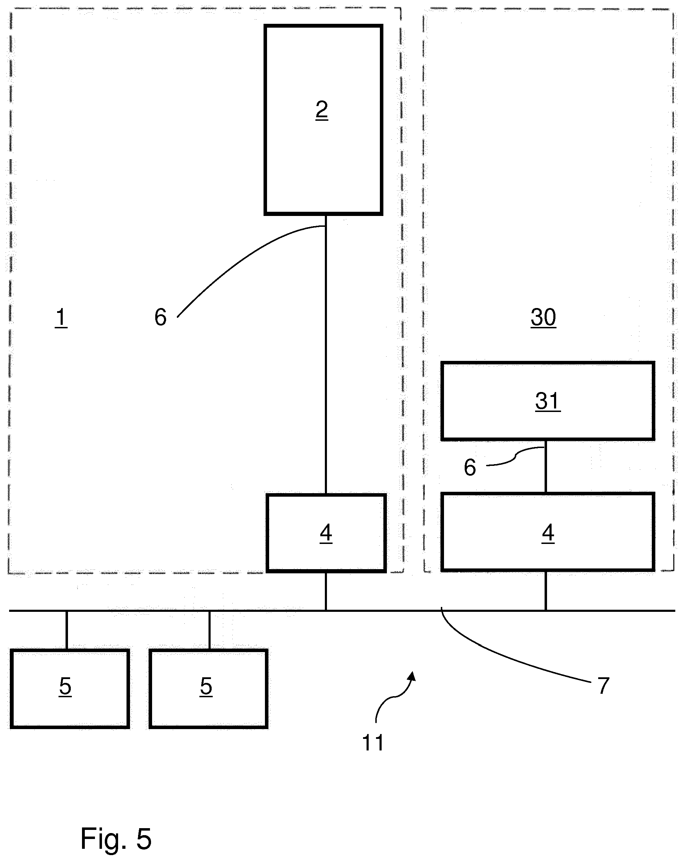

Die Figur 5 zeigt eine dritte beispielhafte Ausführungsform eines Steuerungssystems 11 mit einer Zählereinheit 30 gemäß der vorliegenden Erfindung.

Im Unterschied zur zweiten Ausführungsform gemäß der Figur 4 umfasst dieses Steuerungssystem 11 gemäß Figur 4 eine Zählereinheit 30, die ein Busschnittstellenmodul 31 sowie eine Busschnittstelleneinheit 4 aufweist. Mittels der Busschnittstelleneinheit 4 ist die Zählereinheit 30 am externen Bus 7 angekoppelt. Das Busschnittstellenmodul 31 und die Busschnittstelleneinheit 4 sind über einen internen Bus 6 miteinander verbunden. Das Busschnittstellenmodul 31 ist dabei also für die Kommunikationsmechanismen und - protokolle des internen Busses 6 der Zählereinheit 30 geeignet ausgebildet.

Auch gemäß dieser dritten Ausführungsform ist die Zählereinheit 30 somit nicht von der Steuerungseinrichtung 1 umfasst, sondern ebenso wie die Steuerungseinrichtung 1 selbst an den externen Bus 7 angekoppelt und über den externen Bus 7 auch mit den Busteilnehmereinheiten 5 verbunden. Aufgrund der Schnittstelleneinheit 4 der Steuerungseinrichtung 1, die den internen Bus 6 der Steuerungseinrichtung 1 mit dem externen Bus 7 koppelt, ist die Zählereinheit 30 auch mit dem Prozessorsystem 2 der Steuerungseinrichtung 1 verbunden.

Auch bei dieser Ausführungsform empfängt die Zählereinheit 30 aus dem Bussystem 6, 7 bzw. aus einem über das Bussystem übertragenen Datenstrom Eingangsdaten für die Zählermodule 3.1, 3.n, die von dem Prozessorsystem 2 und/oder von einer der Busteilnehmereinheiten 5 stammen. Ferner gibt die Zählereinheit 30 Ergebnisdaten der Zählermodule 3.1, 3.n an das Prozessorsystem 30 und/oder an eine der Busteilnehmereinheiten 5 auf das Bussystem 6, 7 aus.

Bis auf die Busschnittstelleneinheit 4 und das Busschnittstellenmodul 31 sind die weiteren bereits beschriebenen und in Figur 2 dargestellten Module 32, 33, 34, 35, 3.1 und 3.n der Zählereinheit 30 in Figur 5 der Einfachheit halber nicht nochmals dargestellt, jedoch ebenso vorgesehen.

Je nach Ausführungsform kann die Zählereinheit 30 also an verschiedene Busse oder Datennetze angekoppelt werden.

### Bezugszeichenliste

- 1: Steuerungseinrichtung
- 2: Prozessorsystem
- 3.1: Zählermodul
- 3.n: weiteres Zählermodul
- 4: Busschnittstelleneinheit
- 5: Busteilnehmer, Eingangsbaugruppe, Ausgangsbaugruppe
- 6: interner Bus, Prozessdatenbus
- 7: externer Bus, Feldbus, Fernbus, Lokalbus
- 11: Steuerungssystem
- 30: Zählereinheit
- 31: Busschnittstellenmodul
- 32: Auswertungs- und Zuordnungsmodul
- 33: Registermodul
- 34: Steuermodul
- 35: Schaltmodul

## Patentansprüche

1. Zählereinheit (30) mit wenigstens einem Zählermodul (3.1) und einem Busschnittstellenmodul (31), wobei die Zählereinheit als Hardware ausgebildet ist und über das Busschnittstellenmodul (31) die Zählereinheit (30) an ein Bussystem (6, 7) ankoppelbar ist, wobei
- Eingangsdaten für das Zählermodul (3.1) über das Busschnittstellenmodul (31) aus einem Bussystem (6, 7) empfangbar und
- Ergebnisdaten des Zählermoduls (3.1) über das Busschnittstellenmodul (31) auf das Bussystem (6, 7) ausgebbar sind, **dadurch gekennzeichnet, dass**
- ein Auswertungs- und Zuordnungsmodul (32) umfasst ist, das mit dem Busschnittstellenmodul (31) und dem Zählermodul (3.1) verbunden ist, wobei das Auswertungs- und Zuordnungsmodul (32) ausgebildet ist, aus einem in einem Bussystem (6, 7) übertragenen Datenstrom Eingangsdaten für das Zählermodul (3.1) zu maskieren, zu extrahieren und auszuwerten und sie dem Zählermodul (3.1) zuzuordnen und weiterzuleiten.

2. Zählereinheit (30) nach vorstehendem Anspruch, ferner umfassend wenigstens ein weiteres Zählermodul (3.n) und ein Schaltmodul (35), wobei über das Schaltmodul (35) das Auswertungs- und Zuordnungsmodul (32) mit den Zählermodulen (3.1, ..., 3.n) verbunden ist, und
wobei das Schaltmodul (35) insbesondere ausgebildet ist als Demultiplexer für Eingangsdaten für die Zählermodule (3.1, ..., 3.n) und als Multiplexer für die Ergebnisdaten der Zählermodule (3.1, ..., 3.n).

3. Zählereinheit (30) nach einem der vorstehenden Ansprüche, ferner umfassend
wenigstens ein Steuermodul (34), das mit dem Auswertungs- und Zuordnungsmodul (32) und insbesondere auch mit dem Schaltmodul (35) verbunden ist,
wobei das Steuermodul (34) ausgebildet ist zum Steuern der Funktionsweise der Zählereinheit (30) und insbesondere zum Steuern des Auswertungs- und Zuordnungsmoduls (32) und/oder des Schaltmoduls (35).

4. Zählereinheit (30) nach dem vorstehendem Anspruch, ferner umfassend ein Registermodul (33), das ausgebildet ist zum Speichern wenigstens eines Parameters,
wobei der Parameter insbesondere eine Zuordnungsinformation, einen Grenzwert, oder einen Schwellenwert umfasst, und
wobei das Registermodul (33) mit dem Steuermodul (34) verbunden ist, und
das Steuermodul (34) ausgebildet ist zum Steuern der Funktionsweise der Zählereinheit (30) unter Berücksichtigung des in dem Registermodul (33) gespeicherten Parameters.

5. Steuerungssystem (11) mit einer Zählereinheit (30) nach einem der vorstehenden Ansprüche, ferner umfassend eine Steuerungseinrichtung (1) und ein Bussystem (6, 7),
wobei die Zählereinheit (30) und die Steuerungseinrichtung (1) mit dem Bussystem (6, 7) verbunden sind.

6. Steuerungssystem (11) nach vorstehendem Anspruch, wobei die Steuerungseinrichtung (1) ein Prozessorsystem (2) und eine Busschnittstelleneinheit (4) umfasst, und wobei das Bussystem einen internen Bus (6) umfasst, mittels dem das Prozessorsystem (2) und die Busschnittstelleneinheit (4) miteinander verbunden sind.

7. Steuerungssystem (11) nach vorstehendem Anspruch, ferner umfassend wenigstens eine Busteilnehmereinheit (5), wobei das Bussystem einen externen Bus (7) umfasst, mittels dem die Busschnittstelleneinheit (4) der Steuerungseinrichtung (1) und die Busteilnehmereinheit (5) miteinander verbunden sind.

8. Steuerungssystem (11) nach einem der beiden vorstehenden Ansprüche, wobei die Zählereinheit (30) an den internen Bus (6) oder an den externen Bus (7) angekoppelt ist.

9. Steuerungssystem (11) nach vorstehendem Anspruch, wobei die Zählereinheit (30) Eingangsdaten für das Zählermodul (3.1, ..., 3.n) von dem Prozessorsystem (2) und/oder von der Busteilnehmereinheit (5) aus dem Bussystem (6, 7) empfängt, und wobei die Zählereinheit (30) Ergebnisdaten des Zählermoduls (3.1, ..., 3.n) an das Prozessorsystem und/oder an die Busteilnehmereinheit (5) auf das Bussystem (6, 7) ausgibt.

10. Steuerungssystem nach einem der beiden vorstehenden Ansprüche, ferner umfassend wenigstens eine weitere Busteilnehmereinheit (5), die ebenfalls mit dem externen Bus (7) verbunden ist, wobei die Zählereinheit (30) Eingangsdaten von der einen Busteilnehmereinheit (5) aus dem Bussystem (6, 7) empfängt, und wobei die Zählereinheit (30) Ergebnisdaten an die andere Busteilnehmereinheit (5) auf das Bussystem (6, 7) ausgibt.

## Claims

1. A meter unit (30), comprising at least one meter module (3.1) and a bus interface module (31), wherein the meter unit is implemented in hardware, and wherein the meter unit (30) can be coupled to a bus system (6, 7) via the bus interface module (31);
wherein
- input data for the meter module (3.1) can be received from a bus system (6, 7) via the bus interface module (31); and
- result data from the meter module (3.1) can be output onto the bus system (6, 7) via the bus interface module (31) ;
**characterized by**
- comprising an evaluation and assignment module (32) which is connected to the bus interface module (31) and to the meter module (3.1), wherein the evaluation and assignment module (32) is adapted to mask, extract and evaluate input data for the meter module (3.1) from a data stream transferred on a bus system (6, 7), and to assign and forward them to the meter module (3.1).

2. The meter unit (30) according to the preceding claim, further comprising at least one further meter module (3.n) and a switching module (35);
wherein the switching module (35) is connected between the evaluation and assignment module (32) and the meter modules (3.1, ..., 3.n); and
wherein the switching module (35) is in particular configured as a demultiplexer for input data for the meter modules (3.1, ..., 3.n) and as a multiplexer for the result data from the meter modules (3.1, ..., 3.n).

3. The meter unit (30) according to any one of the preceding claims, further comprising
at least one control module (34) which is connected to the evaluation and assignment module (32) and is in particular also connected to the switching module (35); wherein the control module (34) is adapted to control the operation of the meter unit (30) and in particular to control the evaluation and assignment module (32) and/or the switching module (35).

4. The meter unit (30) according to the preceding claim, further comprising
a register module (33) adapted to store at least one parameter;
wherein the parameter in particular comprises an assignment information, a limit value, or a threshold value; and
wherein the register module (33) is connected to the control module (34); and
the control module (34) is adapted to control the operation of the meter unit (30) taking into account the parameter stored in the register module (33).

5. A control system (11) comprising a meter unit (30) according to any one of the preceding claims, further comprising a control device (1) and a bus system (6, 7); wherein the meter unit (30) and the control device (1) are connected to the bus system (6, 7).

6. The control system (11) according to the preceding claim, wherein the control device (1) comprises a processor system (2) and a bus interface unit (4); and wherein the bus system comprises an internal bus (6) which connects the processor system (2) and the bus interface unit (4) with each other.

7. The control system (11) according to the preceding claim, further comprising at least one bus subscriber unit (5), wherein the bus system comprises an external bus (7), which connects the bus interface unit (4) of the control device (1) and the bus subscriber unit (5) with each other.

8. The control system (11) according to any one of the two preceding claims, wherein the meter unit (30) is coupled to the internal bus (6) or to the external bus (7).

9. The control system (11) according to the preceding claim, wherein the meter unit (30) receives input data for the meter module (3.1, ..., 3.n) from the processor system (2) and/or from the bus subscriber unit (5) via the bus system (6, 7); and wherein the meter unit (30) outputs result data from the meter module (3.1, ..., 3.n) for the processor system and/or for the bus subscriber unit (5) onto the bus system (6, 7).

10. The control system according to any one of the two preceding claims, further comprising at least one further bus subscriber unit (5) which is also connected to the external bus (7); wherein the meter unit (30) receives input data from the one bus subscriber unit (5) via the bus system (6, 7), and wherein the meter unit (30) outputs result data for the other bus subscriber unit (5) onto the bus system (6, 7).

## Revendications

1. Unité de comptage (30) comprenant au moins un module de comptage (3.1) et un module d'interface de bus (31), l'unité de comptage étant réalisée sous forme matérielle et l'unité de comptage (30) pouvant être couplée à un système de bus (6, 7) par l'intermédiaire du module d'interface de bus (31),
dans laquelle :
- les données d'entrée pour le module de comptage (3.1) peuvent être reçues d'un système de bus (6, 7) par l'intermédiaire du module d'interface de bus (31) et
- les données de résultat du module de comptage (3.1) peuvent être délivrées au système de bus (6, 7) par l'intermédiaire du module d'interface de bus (31),
**caractérisée en ce que** :
- un module d'évaluation et d'affectation (32) est compris, lequel est relié au module d'interface de bus (31) et au module de comptage (3.1), le module d'évaluation et d'affectation (32) étant conçu pour masquer, pour extraire et pour évaluer les données d'entrée pour le module de comptage (3.1) provenant d'un flux de données transmis dans un système de bus (6, 7) et pour les affecter et les transférer au module de comptage (3.1).

2. Unité de comptage (30) selon la revendication précédente, comprenant en outre au moins un autre module de comptage (3.n) et un module de commutation (35), dans laquelle le module d'évaluation et d'affectation (32) est relié aux modules de comptage (3.1, ..., 3.n) par l'intermédiaire du module de commutation (35), et
dans laquelle le module de commutation (35) est réalisé en particulier sous la forme d'un démultiplexeur destiné aux données d'entrée pour les modules de comptage (3.1, ..., 3,n) et sous la forme d'un multiplexeur destiné aux données de résultat des modules de comptage (3.1, ..., 3.n).

3. Unité de comptage (30) selon l'une quelconque des revendications précédentes, comprenant en outre :
au moins un module de commande (34), qui est relié au module d'évaluation et d'affectation (32) et en particulier également au module de commutation (35),
dans laquelle le module de commande (34) est conçu pour commander le fonctionnement de l'unité de comptage (30) et en particulier pour commander le module d'évaluation et d'affectation (32) et/ou le module de commutation (35).

4. Unité de comptage (30) selon la revendication précédente, comprenant en outre un module de registre (33), qui est conçu pour mettre en mémoire au moins un paramètre,
dans laquelle le paramètre comporte en particulier une information d'affectation, une valeur limite, ou une valeur seuil, et
dans laquelle le module de registre (33) est relié au module de commande (34), et
le module de commande (34) est conçu pour commander le fonctionnement de l'unité de comptage (30) avec prise en compte du paramètre mis en mémoire dans le module de registre (33).

5. Système de commande (11) comprenant une unité de comptage (30) selon l'une quelconque des revendications précédentes, comprenant en outre un dispositif de commande (1) et un système de bus (6, 7),
dans lequel l'unité de comptage (30) et le dispositif de commande (1) sont reliés au système de bus (6, 7).

6. Système de commande (11) selon la revendication précédente, dans lequel le dispositif de commande (1) comprend un système de processeur (2) et une unité d'interface de bus (4), et dans lequel le système de bus comporte un bus interne (6) au moyen duquel le système de processeur (2) et l'unité d'interface de bus (4) sont reliés l'un à l'autre.

7. Système de commande (11) selon la revendication précédente, comprenant en outre au moins une unité d'abonné du bus (5), dans lequel le système de bus comporte un bus externe (7) au moyen duquel l'unité d'interface de bus (4) du dispositif de commande (1) et l'unité d'abonné du bus (5) sont reliées l'une à l'autre.

8. Système de commande (11) selon l'une des deux revendications précédentes, dans lequel l'unité de comptage (30) est couplée au bus interne (6) ou au bus externe (7).

9. Système de commande (11) selon la revendication précédente, dans lequel l'unité de comptage (30) reçoit du système de bus (6, 7) des données d'entrée pour le module de comptage (3.1, ..., 3.n) provenant du système de processeur (2) et/ou de l'unité d'abonné du bus (5), et dans lequel l'unité de comptage (30) délivre au système de bus (6, 7) les données de résultat du module de comptage (3.1, ..., 3.n) envoyées au système de processeur et/ou à l'unité d'abonné du bus (5).

10. Système de commande selon l'une des deux revendications précédentes, comprenant en outre au moins une autre unité d'abonné du bus (5), qui est également reliée au bus externe (7), dans lequel l'unité de comptage (30) reçoit du système de bus (6, 7) les données d'entrée provenant d'une des unités d'abonné du bus (5), et dans lequel l'unité de comptage (30) délivre au système de bus (6, 7) les données de résultat envoyées à l'autre unité d'abonné du bus (5).
